# EUROPEAN PATENT APPLICATION

(11) **EP 3 242 189 A1**
(43) Date of publication of application: **08.11.2017**
(21) Application number: 14909353.6
(22) Date of filing: 30.12.2014
(51) Int. Cl.: G06F 3/041

(54) **TOUCH OPERATION METHOD, TOUCH OPERATION ASSEMBLY AND ELECTRONIC DEVICE**

(71) Applicant: Shenzhen Royole Technologies Co. Ltd., Shenzhen, Guangdong 518172 (CN)
(72) Inventor: YANG, Songling, Shenzhen Guangdong 518052 (CN); LIU, Zihong, Shenzhen Guangdong 518052 (CN)
(74) Representative: Johnson, Richard Alan
(86) International application number: PCT/CN2014/095489
(87) International publication number: WO 2016/106541

(57) **Abstract**

The disclosure provides a touch operation assembly, includes: a first touch sensor and a second touch sensor both configured to generate a touch signal in response to a touch, and a judging module coupled to the first and second touch sensors and configured to: judge whether the second touch sensor generates a touch signal when detecting the first touch sensor generates a touch signal, and trigger a first operation if yes; and judge whether the first touch sensor generates a touch signal when detecting the second touch sensor generates a touch signal, and trigger a second operation if yes. Through combining the first and the second touch sensor, the touch operation assembly provides different operations based on the order that the touch signals detected, more operations are expanded with a limited physical structure, which enhances user operating experiences.

## Description

### TECHNICAL FIELD

This disclosure relates generally to a control technical filed, and more particularly relates to a touch operating method, a touch operation assembly, and an electronic device having the same.

### BACKGROUND

Due to its intuition, the touch technology has been widely configured in various types of electronic equipments to improve the facility of equipment control. Relying on the rich operating interfaces provided by touch screen display devices, the user can touch the corresponding display area to trigger the associated function in an intuitive manner, according to a specific function option presented on the operating interfaces.

However, for devices whose display area cannot be directly operated, e.g., an immersion head-mounted display device, which typically provides manipulating functions by adopting physical buttons, the following problems may occur.

First, with an immersion device equipped, the control buttons cannot be observed, so the user must learn the button layout of the immersion device and their associated manipulating functions before using the device. In addition, a single function served by each physical button may increase the difficulty of use, which leads to a reduction of user acceptance for new devices.

Second, the number of physical buttons installed may be limited due to product design considerations, which reduces the functionality provided for user control.

In view of the above, with respect to different forms of products, the related art is not able to provide a manipulating method which is compatible with the product's characteristics and can enhance the user operating experience.

### SUMMARY

One objective of the disclosure lies in providing a touch operating method, a touch operation assembly and an electronic device having the same in order to resolve the problems present in the related art.

The disclosure provides a touch operation assembly that comprises:
A first touch sensor and a second touch sensor both configured to generate a touch signal in response to a touch; and
A judging module coupled to the first and second touch sensors and configured to: judge whether the second touch sensor produces a touch signal when detecting that the first touch sensor produces a touch signal, and trigger a first operation if the second touch sensor produces the touch signal; and determine whether the first touch sensor produces a touch signal when detecting that the second touch sensor produces a touch signal, and trigger a second operation if the first touch sensor produces the touch signal.

The disclosure further provides an electronic device comprising the above touch operation assembly.

The disclosure further provides a touch operating method, the method comprising:
Generating a touch signal by a first touch sensor or a second touch sensor, in response to a touch;
Judging whether the second touch sensor produces a touch signal when detecting the first touch sensor produces a touch signal, and triggering a first operation if the second touch sensor produces the touch signal; and
Judging whether the first touch sensor produces a touch signal when detecting the second touch sensor produces a touch signal, and triggering a second operation if the first touch sensor produces the touch signal.

According to the touch operation assembly, electronic device, and touch operating method provided by embodiments of the disclosure, different operations can be provided based on the order in which the touch signals are detected through a combination of a first touch sensor and a second touch sensor. As a result, more operations can be expanded with a limited physical structure and the operations as defined don't need to rely on the operating interfaces, thus to enhance the user operating experience.

### BRIEF DESCRIPTION OF THE ACCOMPANYING DRAWINGS

FIG. 1 is a block diagram illustrating a touch operation assembly according to an embodiment of the disclosure.
FIG. 2 is a top view of a touch operation assembly according to an embodiment of the disclosure.
FIG. 3 is a cross-sectional view of the touch operation assembly of FIG. 2.
FIG. 4 is a diagram illustrating a touch operation according to an embodiment of the disclosure.
FIG. 5 is a flowchart illustrating a touch operating method according to an embodiment of the disclosure.

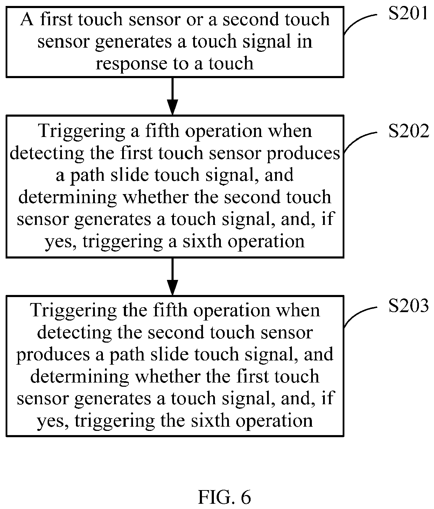

FIG. 6 is a flowchart illustrating a touch operating method according to another embodiment of the disclosure.

### DETAILED DESCRIPTION OF ILLUSTRATED EMBODIMENTS

The present disclosure will now be described in further detail with reference to the accompanying drawings and embodiments, in which the objects, solutions, and advantages of the disclosure will become more apparent. It is to be understood that the specific embodiments described herein are merely illustrative of the disclosure and are not intended to limit the disclosure.

In the following exemplary embodiments, the same reference signs are configured to designate the same components.

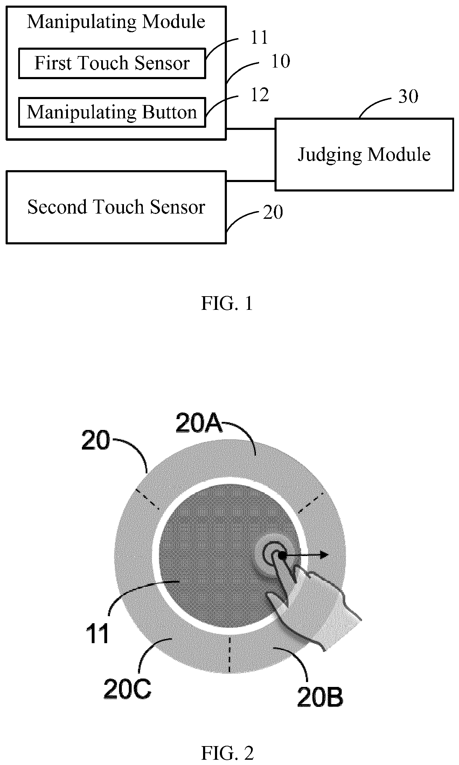

Referring to FIG. 1, a block diagram of a touch operation assembly 1 provided by an embodiment of the disclosure is shown. The touch operation assembly 1 may comprise a first touch sensor 11, a second touch sensor 20, and a judging module 30. The first touch sensor 11 and the second touch sensor 20 may be configured to generate touch signals in response to a touch operation, namely they may produce a touch signal when detecting a touch. The judging module 30 is configured to judge whether the second touch sensor 20 produces a touch signal when detecting the first touch sensor 11 produces a touch signal, and trigger a first operation if the second touch sensor 20 produces the touch signal. The judging module 30 is further configured to judge whether the first touch sensor 11 produces a touch signal when the second touch sensor 20 produces a touch signal, and trigger a second operation if the first touch sensor 11 produces a touch signal. With the touch operation assembly provided by this embodiment, different operations can be triggered depending on different touch orders by using the combination of first touch sensor 11 and second touch sensor 20.

In an exemplary embodiment, the first operation and the second operation may be different operations corresponding to the same manipulating function. For example, the manipulating function can be volume adjustment, video fast forward and backward adjustment, menu entering or exiting operation, etc. For further clarification, an embodiment illustrated in FIG. 2 will be combined to described in detail, as shown in the figure, the first touch sensor 11 is circular shaped and the second touch sensor 12 is annular shaped as, where the second touch sensor 20 surrounds the first touch sensor 11 and is spaced apart from the first touch sensor 11. When the user's finger slides from the first touch sensor 11 to the second touch sensor 20, the first touch sensor 11 generates the touch signal firstly and second touch sensor 20 generates a touch signal afterwards. At this point, the judging module 30 determines that these two touch signals are detected one after another and triggers a first operation, the first operation may be entering the next level menu according to a function menu item where a focus point currently located on. Correspondingly, when the user's finger slides from the second touch sensor 20 to the first touch sensor 11, the second touch sensor 20 generates the touch signal firstly and the first touch sensor 11 may generate the touch signal afterwards, and at this point, the judging module 30 may determine that the two touch signals are detected one after another, and trigger a second operation, the second operation may be returning to a previous level menu. Alternatively, the first operation may be increasing the volume, while the corresponding second operation may be reducing the volume; the first operation also may be fast forward a video, while the corresponding second operation may be fast backward the video.

In an exemplary embodiment, the judging module 30 may further be configured to: continuously perform an associated second operation or an associated first operation when detecting that the touch signal of the first touch sensor or the second touch sensor is generated afterwards and is continuous, until the continuous signal generated afterwards is terminated. So that, the user's operations can be simplified in specific scenarios. For example, in the case when the first operation is increasing the volume, then when the user slides the finger from first touch sensor 11 to second touch sensor 20 and hold the touch on the second touch sensor 20 for a certain period of time, the first touch sensor 11 may first generate a touch signal, and second touch sensor 20 may afterwards generate a touch signal for a continuous period of time, namely a continuous signal. At this point, the judging module 30 may determine the two touch signals are detected one after another and therefore may trigger the first operation for increasing the volume. Furthermore, since the second touch sensor 20 continues to generate the touch signal, the judging module 30 may continue to increase the volume in accordance with the continuous signal until the user's finger leaves second touch sensor 20. As a result, the user can increase or decrease the volume more convenient. Apparently, the specific application scenario is not limited to adjusting the volume; it can also be adjusting the progression of a video or any other scenario applying this operation suitably.

Further, a number of different operations can be triggered when there are a number of second touch sensors. For example, if the number of the second touch sensors is N, then the number of different operations that can be defined in combination with the first touch sensor is 2N. As shown in FIG. 2, within the area in which the second touch sensor 20 is disposed in the above embodiment, a number of separated second touch sensors 20A, 20B, and 20C are set. The second touch sensors 20A, 20B, 20C can be respectively combined with the first touch sensor 11 to define a volume adjustment function, a video fast forward and fast backward function, and a menu entering and exiting function, respectively. Namely, when the user's finger slides from first touch sensor 11 to second touch sensor 20A, the judging module 30 may first receive a touch signal generated by first touch sensor 11, and then receive a touch signal generated by second touch sensor 20A. At this point, the judging module 30 may trigger a volume increasing operation. In reverse, when the user's finger slides from second touch sensor 20A to first touch sensor 11, the second touch sensor 20A may first generate a touch signal, and the first touch sensor 11 may generate a touch signal afterwards. At this point, the judging module 30 may trigger a volume decreasing operation. When the user's finger slides from the first touch sensor 11 to the second touch sensor 20B, the judging module 30 may first receive a touch signal produced by first touch sensor 11, and then receive a touch signal produced by second touch sensor 20B. In this case, a video fast forward operation may be triggered. In reverse, when the user's finger slides from the second touch sensor 20B to the first touch sensor 11, the second touch sensor 20B may first generate a touch signal, and the first touch sensor 11 may generate a touch signal afterwards. At this point, the judging module 30 may trigger a video fast backward operation. Likewise, the combination of first touch sensor 11 and second touch sensor 20C can be operated in a manner similar to that described above in relation to FIG. 2, and so they will not be detail described again.

It is to be understood that the above-described manipulating functions may specifically define the first operation and the second operation according to the application characteristics of different electronic devices. Those person skilled in the art will be able to implement the definition in accordance with the particular application principles of the embodiments described above.

When the first touch sensor 11 and second touch sensor 20 are disposed within the range controllable by a single hand, the manipulation can be performed by a continuous operation such as a slide across the two touch sensors as the embodiments described above. In other embodiments, when the first touch sensor and the second touch sensor are disposed comparatively far away from each other, the manipulation can be triggered through combining two hands. Therefore, multiple operations can be defined without relying on the interface menus, which reduces the complexity of the menu item settings, and the operations can be clearly defined, which are user-friendly.

Typically, the judging module 30 may further be configured to judge whether the touch signals respectively generated by first touch sensor 11 and the second touch sensor 20 that are successively detected are within a preset effective time interval, and if yes, the first operation would be triggered. The judging module 30 may further be configured to judge whether the touch signals respectively generated by second touch sensor 20 and the first touch sensor 11 that are successively detected are within the preset effective time interval, and if yes, the second operation may be triggered. That is, when the judging module 30 firstly detects the touch signal generated by first touch sensor 11, the judging module 30 may judge whether the second touch sensor 20 generates a touch signal in the preset effective time interval, and if yes, then triggers the first operation. When the judging module 30 firstly detects the touch signal generated by second touch sensor 20, the judging module 30 may judge whether first touch sensor 11 generates a touch signal in the preset effective time interval, and if yes, then triggers the second operation. Furthermore, the judging module 30 may judge whether a difference between the successive trigger times of the touch signals generated by the first touch sensor 11 and the second touch sensor 20 is within the preset effective time interval and correspondingly triggers the first operation or second operation if the difference is within the preset effective time interval. Therefore, the effectiveness and accuracy of the user's operation can be ensured.

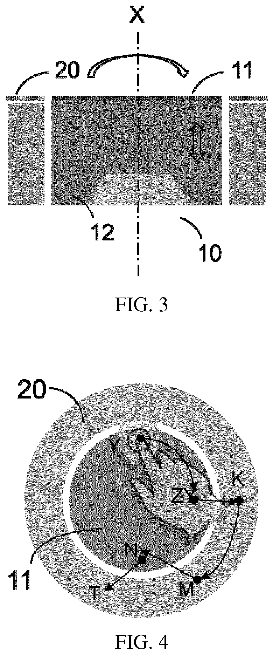

The touch operation assembly 1 may further include a manipulating button 12 for triggering a third operation after being pressed. The manipulating button 12 may be disposed together with first touch sensor 11 or second touch sensor 20 and thus constitute a manipulating module 10. Referring now to FIG. 3, there is shown a cross-sectional view of a touch operation assembly provided by the present embodiment. The first touch sensor 11 of the touch operation assembly is disposed directly on the manipulating button 12, but the disclosure is not limited thereto and the second touch sensor may also be disposed on the manipulating button on account of other considerations such as the product's specific form, characteristics, and so on. In addition, the first touch sensor 11 or the second touch sensor 20 may be disposed indirectly to the manipulating button 12 through other components or parts, as long as the button can be pressed by pressing the sensor. When the user presses the first touch sensor 11, thus making the button 12 is pressed down, then a third operation may be triggered, which may be defined as a specific selection operation on the current menu interface, a power switch operation, etc.

Typically, the manipulating button 12 may be a button-type rotary encoder used to trigger a third operation upon being pressed and further used to measure the rotation angle for triggering a fourth operation. As shown in FIG. 3, the manipulating button can be rotated about the X-axis. In particular, the fourth operation can be volume adjustment, video fast forward and backward adjustment, etc., thus more convenient adjustment ways can be provided depending on the manipulation characteristics of specific products and contents. The button-type rotary encoder has become an existing mature technology, so the principles of which are not to be detail described herein.

In an exemplary embodiment, the touch operation assembly can use the first touch sensor in combination with the second touch sensor to define different operations corresponding to different manipulating functions, and can further use the button-type rotary encoder in conjunction to provide different control modes with the button and rotary knob, thus providing different manipulating modes with respect to manipulation characteristics of different products, and so optimizing the user's operating experience.

In another embodiment, the judging module 30 may further be configured to trigger a fifth operation when the first touch sensor 11 detects that the touch signal indicates a path slide, and judge whether the second touch sensor 20 detects a touch signal, and if yes, trigger a sixth operation. The judging module 30 may further be configured to trigger the fifth operation when the second touch sensor 20 detects that the touch signal indicates a path slide, and judge whether the first touch sensor 11 detects a touch signal, and if yes, trigger the sixth operation. For example, the fifth operation may be a focus movement, while the sixth operation may be a "confirm" operation, such as a current call of the operating interface. Specifically, when a touch operation assembly incorporating a manipulating button is used, the operating interface can be called up by pressing the manipulating button, namely the third operation can be associated with different specific operations based on the currently displayed contents or status. In the displayed operating interface, the user can make a path slide Y-> Z on the first touch sensor 11 by the finger, as shown in FIG. 4, to trigger a movement of the focus point on the manipulation options in the operating interface; when the focus point moves to the option to be manipulated, the finger can move to the second touch sensor 20 and perform a path slide Z->K to trigger the "confirm" operation so that the next level menu would be entered into. Similarly, if the next level menu includes multiple manipulation options, and further a path slide K->M can be performed on second touch sensor 20. Thus, the path slide K->M may trigger the movement of the focus on the manipulation options in the menu of this level. When the focus point moves to the option to be manipulated, the finger can move to the first touch sensor 11 via a path slide M->N to trigger the "confirm" operation so as to enter the next level menu under this option. If there is no next level menu, the "confirm" operation would be triggered and the path slide M->N may result in execution of this option. In the above embodiment, the user can trigger multiple operations through continuous motions on different touch sensors. Furthermore, the user's finger may be detected as detaching from the touch sensor to perform operations such as exit, return, etc. In addition, a return operation can be triggered via performing the "confirm" operation, and then stop performing the path slide, and then performing the "confirm" operation again. For example, the user slides his finger on second touch sensor 20 to make a path slide K->M thus locating the focus over the option to be manipulated, and then slides the finger to first touch sensor 11 to perform a path slide M->N thus entering the next level menu under this option, when find there is no option to be manipulated in the next level, then the user may slide his finger directly back to second touch sensor 20 to make a path slide N->T to trigger returning to the previous level menu. The above specific examples are merely illustrative of the present disclosure and are not intended to be limited.

The touch operation assemblies provided by the above embodiments use the first touch sensor in combination with the second touch sensor to define different operations corresponding to different manipulating functions, and further, use touch mode with path slide in conjunction, so that the user can trigger multiple operations through a continuous gesture. Furthermore, the button-type rotary encoder can be used in combination to provide different manipulating methods with the button and rotary knob. Thus different manipulating methods can be provided depending on manipulation characteristics of different products, and so the user's operating experience can be optimized.

There is also provided an electronic device comprising any one of the above touch operation assemblies. The electronic device may include, but is not limited to, a mobile phone, a PAD, a computer, a remote control, a headphone, a headset display device, and so on.

There is further provided a touch operating method, the method comprising the following steps.

In S101, a first touch sensor or a second touch sensor may generate a touch signal in response to a touch.

In S102, judging whether the second touch sensor produces a touch signal when detecting that the first touch sensor produces a touch signal, and triggering a first operation if the second touch sensor produces the touch signal.

In S103, judging whether the first touch sensor produces a touch signal when detecting that the second touch sensor produces a touch signal, and triggering a second operation if the first touch sensor produces the touch signal.

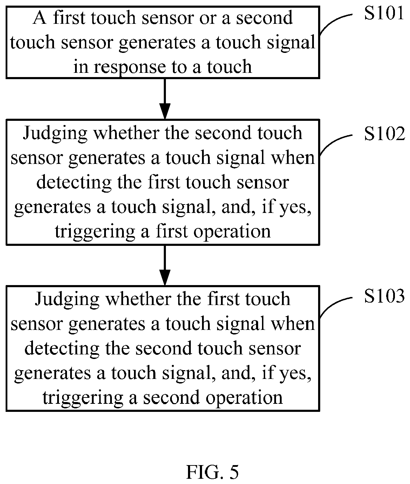

It can be understood, the execution order of steps S102 and S103 as shown in FIG. 5 constitutes merely one implementation of the disclosure, and therefore is not intended to limit the disclosure. That is to say, the steps S102 and S103 can also be executed in reverse or in parallel which are flexible combinations that can be readily made by those persons skilled in the art.

Alternatively, there may be multiple second touch sensors, each touch sensor is corresponding to a different function. The first operation and the second operation may correspond to different operations of the same function.

Alternatively, the method may further comprise: performing an associated second operation or an associated first operation continuously when detecting that the touch signal of the first touch sensor or the second touch sensor is generated afterwards and is a continuous signal.

Alternatively, the steps S102 and S103 may comprise judging whether the touch signals respectively generated by the first touch sensor and the second touch sensor that are successively detected is within a preset effective time interval, and, if yes, triggering the first operation; judging whether the touch signals respectively generated by the second touch sensor and the first touch sensor that are successively detected are within the preset effective time interval, and, if yes, triggering the second operation. The method may further comprise: triggering a third operation when a manipulating button, on which the first touch sensor or the second touch sensor is directly or indirectly disposed, is pressed down.

Alternatively, the manipulating button may be a button-type rotary encoder used for triggering the third operation and further for detecting the rotation angle to trigger a fourth operation.

A touch operating method according to another embodiment is provided, the method includes the following steps.

In S201, a first touch sensor or a second touch sensor generates a touch signal in response to a touch.

In S202, triggering a fifth operation when detecting the first touch sensor generates a path slide touch signal, and judging whether the second touch sensor generates a touch signal, and if yes, triggering a sixth operation.

In S203, triggering the fifth operation when detecting the second touch sensor generates a path slide touch signal, and judging whether the first touch sensor generates a touch signal, and if yes, triggering the sixth operation.

Since the principles of the above touch operation assemblies can be referred to for the specific principles of this method, they are not to be detailed again.

The foregoing description merely depicts some exemplary embodiments of the disclosure, which are not intended to limit the disclosure. Any modifications, equivalent substitutions, and improvements made without departing from the spirits and principles of the disclosure shall all be encompassed within the protection of the disclosure.

## Claims

1. A touch operation assembly, comprising:
a first touch sensor and a second touch sensor both configured to generate a touch signal in response to a touch; and
a judging module coupled to the first and second touch sensors, and configured to: judge whether the second touch sensor generates a touch signal when detecting that the first touch sensor generates a touch signal, and trigger a first operation if the second touch sensor generates the touch signal; and further to judge whether the first touch sensor generates a touch signal when detecting that the second touch sensor generates a touch signal, and trigger a second operation if the first touch sensor generates the touch signal.

2. The touch operation assembly according to claim 1, wherein the first operation and the second operation are different operations corresponding to a same manipulating function.

3. The touch operation assembly according to claim 1 or 2, comprising a plurality of the second touch sensors, each second touch sensor is corresponded to a different manipulating function.

4. The touch operation assembly according to claim 1, wherein the judging module is further configured to perform continuously an associated second operation or an associated first operation when detecting that the touch signal of the first touch sensor or the second touch sensor is generated afterwards and is a continuous signal.

5. The touch operation assembly according to claim 1, wherein the judging module is further configured to: judge whether the touch signals respectively generated by the first touch sensor and the second touch sensor that are successively detected are within a preset effective time interval, and trigger the first operation if they are within the preset effective time interval; and judge whether the touch signals respectively generated by the second touch sensor and the first touch sensor that are successively detected are within the preset effective time interval, and trigger the second operation if they are within the preset effective time interval.

6. The touch operation assembly according to claim 1, further comprising a manipulating button configured to trigger a third operation upon being pressed.

7. The touch operation assembly according to claim 6, wherein the first touch sensor or the second touch sensor is disposed on the manipulating button directly or indirectly.

8. The touch operation assembly according to claim 6, wherein the manipulating button is a button-type rotary encoder configured for triggering the third operation and for detecting a rotation angle to trigger a fourth operation.

9. The touch operation assembly according to any one of claims 1, and 6 to 8, wherein the judging module is further configured to: trigger a fifth operation when detecting that the first touch sensor generates a path slide touch signal, further judge whether the second touch sensor subsequently generates a touch signal, and trigger a sixth operation when the second touch sensor subsequently generates the touch signal; and trigger the fifth operation when detecting the second touch sensor generates a path slide touch signal, further judge whether the first touch sensor subsequently generates a touch signal, and trigger the sixth operation when the first touch sensor subsequently generates the touch signal.

10. An electronic device, wherein the electronic device comprises the touch operation assembly according any one of the claims 1-9.

11. A touch operating method, comprising:
A: generating a touch signal by a first touch sensor or a second touch sensor, in response to a touch;
B: judging whether the second touch sensor generates a touch signal when detecting that the first touch sensor generates a touch signal, and triggering a first operation if the second touch sensor generates the touch signal; and
C: judging whether the first touch sensor generates a touch signal when detecting that the second touch sensor generates a touch signal, and triggering a second operation if the first touch sensor generates the touch signal.

12. The method according to claim 11, wherein there are a plurality of the second touch sensors, each second touch sensor corresponding to a different manipulating function, and the first operation and the second operation are different operations of a same manipulating function.

13. The method according to claim 11, further comprising: performing an associated second operation or an associated first operation continuously when detecting that the touch signal of the first touch sensor or the second touch sensor is generated afterwards and is a continuous signal.

14. The method according to claim 11, further comprising: determining whether the touch signals respectively generated by the first touch sensor and the second touch sensor that are successively detected are within a preset effective time interval, and triggering the first operation if they are within the preset effective time interval; and determining whether the touch signals respectively generated by the second touch sensor and the first touch sensor that are successively detected are within the preset effective time interval, and triggering the second operation if they are within the preset effective time interval.

15. The method according to claim 11, further comprising:
triggering a third operation when a manipulating button, on which the first touch sensor or the second touch sensor is disposed directly or indirectly, is pressed down.

16. The method according to claim 15, wherein the manipulating button is a button-type rotary encoder configured for triggering the third operation and for detecting a rotation angle to trigger a fourth operation.

17. The method according to claim 11, wherein:
the step B comprises: triggering a fifth operation when detecting the first touch sensor generates a path slide touch signal, and further determining whether the second touch sensor subsequently generates a touch signal, and triggering a sixth operation if the second touch sensor subsequently generates the touch signal; and
the step C comprises: triggering the fifth operation when detecting the second touch sensor generates a path slide touch signal, and further determining whether the first touch sensor subsequently generates a touch signal, and triggering the sixth operation if the first touch sensor generates the touch signal.
